# EUROPEAN PATENT APPLICATION

(11) **EP 4 303 096 A1**
(43) Date of publication of application: **10.01.2024**
(21) Application number: 22183874.1
(22) Date of filing: 08.07.2022
(51) Int. Cl.: B62B 7/00, B62B 7/12, B62B 7/10

(54) **A MULTIPURPOSE TRAILER AND A METHOD FOR SECURING A REMOVABLE SEAT TO A MULTIPURPOSE TRAILER**

(71) Applicant: Thule Sweden AB, 335 04 Hillerstorp (SE)
(72) Inventor: Olsson, Johanna, Jönköping (SE); Arvidsson, Andreas, 57691 Sävsjö (SE); Vargvik, Pontus, Jönköping (SE); Adler, Douglas, Värnamo (SE); Johansson, Vincent, 33596 Kulltorp (SE)
(74) Representative: Wallentin, Lars

(57) **Abstract**

A multipurpose trailer (100) for carrying at least one person, wherein said trailer (100) comprises:
a chassis (102) forming a load carrying structure of the multipurpose trailer (100),
a sheet element (104) supported by the chassis (102),
a removeable seat (200), wherein the multipurpose trailer (100) is configured for attachment of the removeable seat (200) in at least two transverse positions of which one is a central position in relation to a transverse direction (T) of the multipurpose trailer (100), and a method (1000) for securing a removable seat (200) to a multipurpose trailer (100).

## Description

### TECHNICAL FIELD

The present disclosure relates to trailers for transporting one or more persons, more particularly the present disclosure relates to a multipurpose trailer and to a method for securing a removable seat to a multipurpose trailer.

### BACKGROUND OF THE INVENTION

Multipurpose trailers are popular items facilitating the active lifestyle of their owners. As the name implies, a multipurpose trailer can serve a variety of purposes. For instance, the multipurpose trailer can be used to transport children on family trips or during the daily commute. The multipurpose trailer can further naturally be used for transporting luggage, pets etc.

Most multipurpose trailers are suitable for use as a trailer during walks and when running (i.e. when the user is pushing or pulling the trailer by foot). Additionally, it is common to provide accessories allowing the trailer to be used for instance when skiing or for attaching the trailer to a bicycle such that it can be towed.

Trailers which are adapted for transporting persons are subject to a plurality of requirements when it comes to the safety they provide for the occupants, manufacturers of multipurpose trailers are constantly seeking to improve their products to meet and surpass these requirements. Moreover, ease of use is an area of constant development especially for multipurpose trailers which can be adapted not only depending on the activity at hand but also for carrying a different number of passengers.

### SUMMARY OF THE INVENTION

In view of the above, an object of the present invention is to provide an improved multipurpose trailer which alleviates at least one of the drawbacks of the prior art as well as a method for securing a removable seat to a multipurpose trailer. For example, an object of the present invention is to provide a multipurpose trailer having improved safety while allowing a user to adapt the multipurpose trailer for use with one or two passengers. Further, it is an object to facilitate removal, attachment and repositioning of a removable seat for a multipurpose trailer.

The objects are achieved by the subject-matter of the independent claims. Advantageous embodiments may be found in the dependent claims and in the accompanying description and drawings.

According to a first aspect of the present disclosure is a multipurpose trailer for carrying at least one person provided. The trailer comprises:
a chassis forming a load carrying structure of the trailer,
a sheet element supported by the chassis,
at least one removeable seat, wherein the trailer is configured for attachment of the removeable seat in at least two transverse positions of which one is a central position in relation to a transverse direction of the multipurpose trailer. The weight distribution of the load in the multipurpose trailer can thus be adapted depending on the number of passengers travelling in the trailer. When one passenger is present, the removable seat may be placed centrally in the multipurpose trailer, reducing the risk of an uneven load that could risk the stability of the trailer for instance during rapid turns or similar.

The multipurpose trailer may comprise at least one upper seat attachment and at least one lower seat attachment to which the removable seat is configured to be secured. The at least one upper seat attachment and/or the at least one lower seat attachment is attached to the sheet element. The provision of the upper and lower seat attachments facilitates attachment and removal of the at least one removable seat to and from the multipurpose trailer. The respective seat attachments being attached to the sheet element facilitates manufacturing of the trailer, as the respective seat attachments may be formed in the sheet element before the sheet element is attached to the trailer. Moreover, the chassis of the trailer does not have be provided with any separate feature for providing the upper and lower seat attachments as they are attached to the sheet element.

In an embodiment where the multipurpose trailer comprises at least one upper seat attachment and at least one lower seat attachment to which the removable seat is configured to be secured, a distance between the at least one upper seat attachment and the at least one lower seat attachment may be configured to vary depending on folding state of the chassis. Attachment of the at least one removable seat is thus facilitated and the risk of unintentional release of the removable seat is further reduced.

The distance between the at least one upper seat attachment and the at least one lower seat attachment may be larger in a use state than in a folded state of the trailer. The distance being larger in the use state may provide a pretensioning force to the at least one removable seat, thus facilitating correct positioning of the removable seat and further securing the attachment thereof to the multipurpose trailer.

In an embodiment in which the multipurpose trailer comprises at least one upper seat attachment and at least one lower seat attachment to which the removable seat is configured to be secured, the chassis may comprise a folding hinge arranged between the at least one upper seat attachment and the at least one lower seat attachment. The folding hinge facilitates controlling the distance between the at least one upper seat attachment and the at least one lower seat attachment as a function of the folding state of the multipurpose trailer.

The multipurpose trailer may comprise at least two pairs of upper seat attachments and at least two pairs of lower seat attachments being aligned in the transverse direction of the trailer and to which the removable seat is configured to be secured. A distance between each upper seat attachment and each lower seat attachment in each pair may be essentially the same as the distance between two adjacent pairs of upper seat attachments and lower seat attachments respectively. Thus may two pairs of upper and/or lower seat attachments provide three different positions of the removable seat in the transverse direction of the trailer, two lateral and one central position.

The multipurpose trailer may further comprises a plurality of straps configured to be secured to a buckle for connection to a harness of each removable seat, wherein one strap is arranged intermediately in the transverse direction of the trailer between every two upper and/or lower seat attachments.

The strap may be attached to the sheet element and/or to the chassis of the trailer.

The removable seat may comprise at least one upper connector and at least one lower connector, the at least one upper connector being configured to be attached a respective upper seat attachment and the at least one lower connector being configured to be attached to a respective lower seat attachment.

Each upper and lower seat attachment may comprises a first opening and a second opening through which a respective connector of the removable seat is configured to pass. The first opening may be larger than the second opening and wherein the first opening on the at least one upper attachment and/or the first opening of the at least one lower attachment is arranged facing in a proximal direction in relation to the trailer. The larger size of the first opening facilitates insertion of the connector into the first opening while the smaller size of the second opening reduces the risk of the connector unintentionally becoming detached from the seat attachment.

Each removable seat may comprise an opening through a seat portion thereof and wherein each strap is configured to extend through said opening. The strap thus further secures the at least one removable seat to the multipurpose trailer.

The trailer may comprise a reclinable backrest and wherein the at least removeable seat is configured to follow the reclining of the backrest.

In a second aspect is a method for securing a removable seat to a multipurpose trailer provided. The multipurpose trailer comprising
a chassis forming a load carrying structure of the trailer,
a sheet element supported by the chassis,
wherein the multipurpose trailer comprises at least one upper seat attachment and at least one lower seat attachment to which the removable seat is configured to be secured, the method comprising the steps of:
   setting the multipurpose trailer in a seat attachment state,
   attaching the at least one removable seat to at least one upper seat attachment and to at least one lower seat attachment,
   setting the multipurpose trailer in a removable seat securing state whereby the at least one removable seat is secured to the multipurpose trailer. Attachment of a removable seat to a multipurpose trailer is thus facilitated, such that the multipurpose trailer can be easily adapted depending on the number of passengers of the trailer. This further improves the useability of the trailer as well as the safety thereof.

Attaching the at least one removable seat may comprise threading at least one upper connector on the removable seat through a corresponding upper seat attachment and threading at least one lower connector on the removable seat through a corresponding lower seat attachment.

Setting the multipurpose trailer in a seat attachment state may comprise at least partially folding the chassis of the multipurpose trailer and wherein setting the multipurpose trailer in a removable seat securing state comprises at least partially unfolding the chassis into a use state of the multipurpose trailer.

### BRIEF DESCRIPTION OF THE DRAWINGS

With reference to the appended drawings, below follows a more detailed description of embodiments of the invention cited as examples.

In the drawings:
Figure 1 discloses a front view of a multipurpose trailer configured for transport of two passengers side by side.
Figure 2 discloses a front view of a multipurpose trailer with the removable seats removed.
Figure 3 discloses a front view of a multipurpose trailer configured for transport of one passenger.
Figure 4 discloses a front view of a removable seat for a multipurpose trailer.
Figure 5 discloses a rear view of a removable seat for a multipurpose trailer.
Figure 6 discloses a rear view of a removable seat for a multipurpose trailer.
Figure 7 discloses a side view of a multipurpose trailer.
Figure 8 discloses a schematic side view of a part of a chassis for a multipurpose trailer in a use state.
Figure 9 discloses a schematic side view of a part of a chassis for a multipurpose trailer in a folded state.
Figure 10 discloses a detail view of a seat attachment and a connector.
Figure 11 discloses a detail view of a seat attachment and a connector.
Figure 12 discloses a schematic flow chart of a method for securing a removable seat to a multipurpose trailer.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION

The teachings herein will now be described more fully hereinafter with reference to the accompanying drawings, in which certain embodiments are shown. Like numbers refer to like elements throughout.

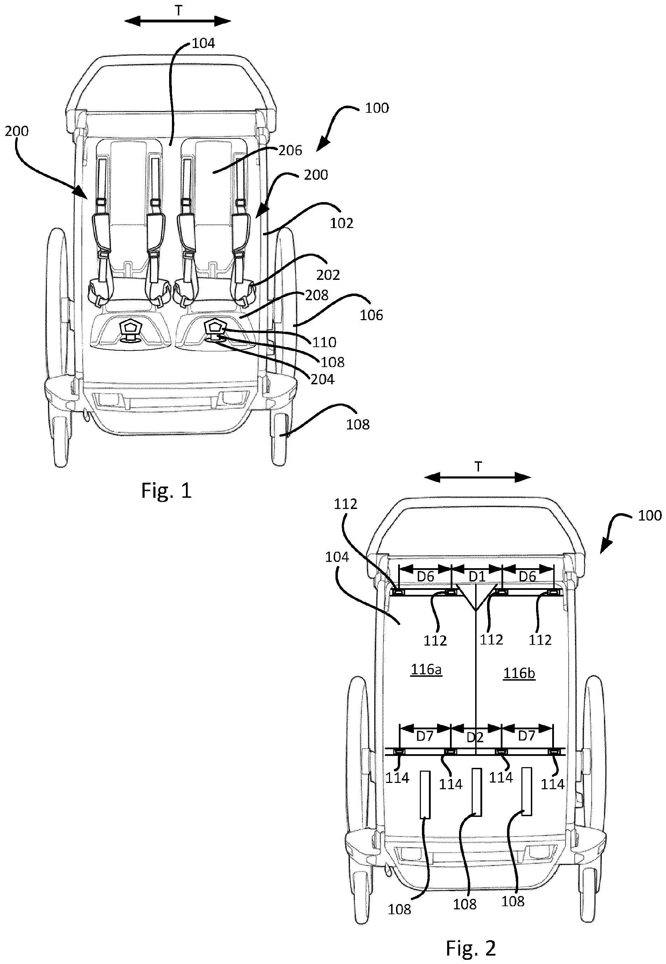

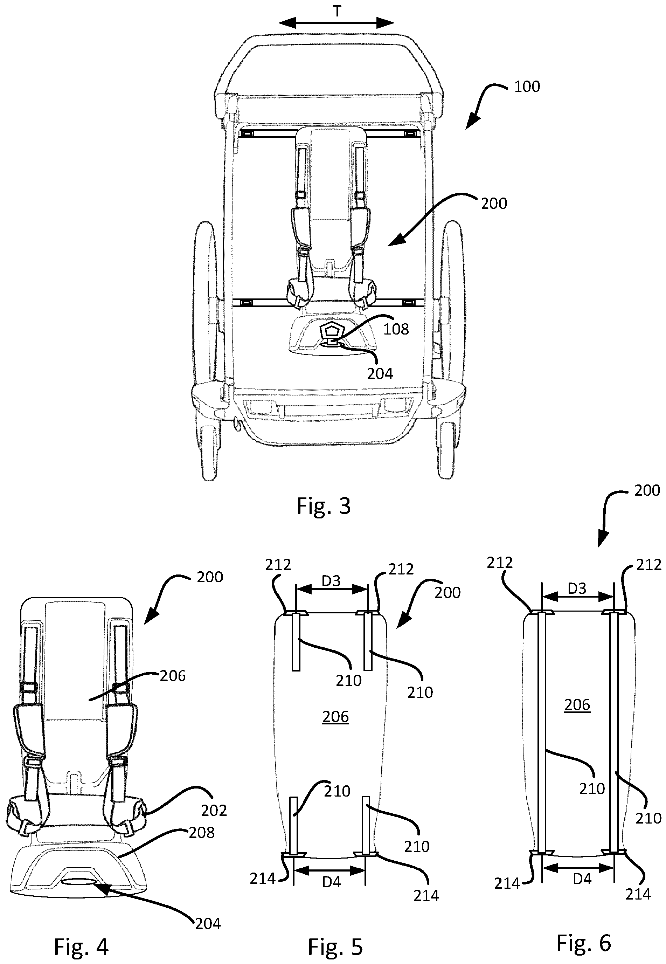

Figure 1 discloses a multipurpose trailer 100 for carrying at least one passenger. Preferably, the multipurpose trailer 100 is configured to optionally carry one or two passengers, preferably one or two infants/children. As such, the multipurpose trailer 100 has a single passenger configuration (shown in Figure 3) and a dual passenger configuration as illustrated in Figure 1.

The trailer 100 comprises a chassis 102 forming a load carrying structure of the trailer 100. The chassis 102 may be foldable, thus allowing the trailer 100 to be folded into a more compact state for instance for fitting the trailer into a vehicle for transport or for storage. As is further illustrated in Figure 1, the trailer 100 may be fitted with main wheels 106 and front wheels 108. Each wheel 106, 108 may be removable for instance for transport or for attachment of an accessory such as a tow bar. The main wheels 106 may for instance be replaced with skis for allowing the trailer 100 to be used for skiing.

The trailer further comprises a sheet element 104 supported by the chassis 102. The sheet element 104 may be a textile element, which is supported by the chassis 102 and in itself at least partially forms a support for instance for a removable seat 200. The sheet element 104 may be made from natural fibers and/or from a plastic material or a combination of several materials. The sheet element 104 may further comprises several separate portions, for instance one or several rear portions forming a backrest and one or several side and front portions which may have an integrated transparent window section. Moreover, the sheet element 104 may be provided with one or more zippers for instance for connecting different portions of the sheet element 104 and/or for providing an opening in the sheet element 104.

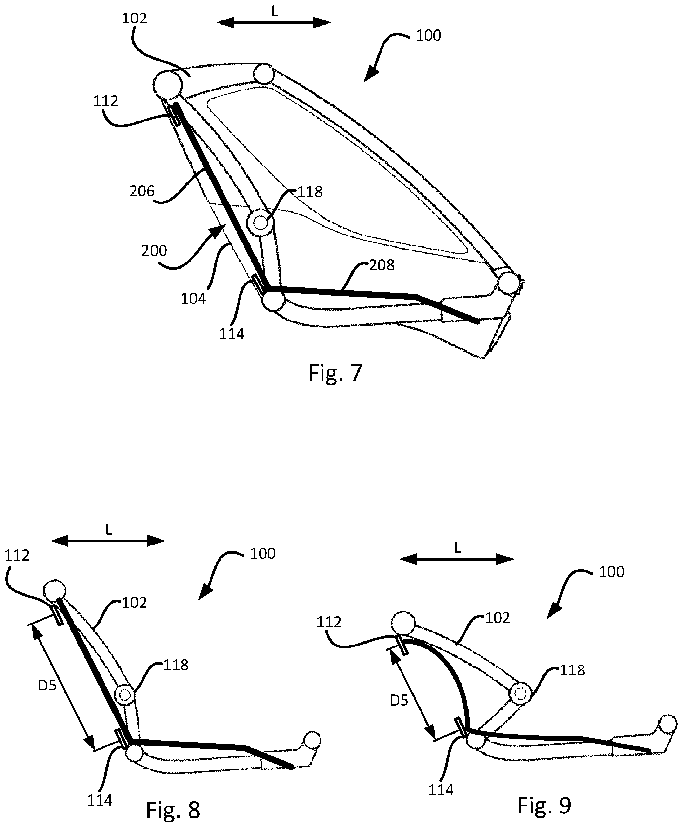

As mentioned, the multipurpose trailer 100 further comprises a removeable seat 200, wherein the trailer 100 is configured for attachment of the removeable seat 200 in at least two transverse positions of which one is a central position (illustrated in Figure 3) in relation to a transverse direction T of the multipurpose trailer 100. The transverse direction T is perpendicular to the longitudinal direction L of the trailer 100, the longitudinal direction L (shown in Figure 7) being arranged in the main travelling direction of the multipurpose trailer 100. Each removable seat 100 may be formed out of a plurality of materials, such as a textile having natural and/or plastic fibers. Moreover, each removable seat 200 may be provided with padding and/or structural reinforcement portions for increasing comfort for the passenger.

As is illustrated in Figure 1, the removable seat 200 may comprise a harness 202 being attached to the seat 200 and thus following it when it is removed or attached to the trailer 100. The harness 202 may further be connectable to a buckle 110, which in turn is connected to the trailer 100.

In Figure 2, the multipurpose trailer 100 is illustrated in a front view with the removable seats 200 removed. As illustrated, the multipurpose trailer 100 may comprise at least one upper seat attachment 112 and at least one lower seat attachment 114 to which the removable seat 200 is configured to be secured. The upper seat attachments 112 and/or the lower seat attachments 114 may be provided in the sheet element 104, thus being indirectly connected to the chassis 102 of the trailer 100 via the sheet element 104. It is however also possible that the each of the upper seat attachments 112 and/or each lower seat attachment 114 may be provided directly connected to the chassis 102 of the trailer 100. Each upper and lower seat attachment 112, 114 is configured for cooperation with a corresponding connector 210, 214 (shown in Figures 5 and 6) on the removable seat 200.

Each pair of upper seat attachments 112 may be arranged such that a distance D1 between two adjacent pairs of upper seat attachment 112 is essentially the same as a distance D6 between each upper seat attachment 112 in each pair. The removable seat 200 can thus be connected both between two adjacent pairs of upper seat attachments 112 as well as aligned with each pair of upper seat attachments 112.

Each pair of lower seat attachments 114 may be arranged such that a distance D2 between two adjacent pairs of lower seat attachment 114 is essentially the same as a distance D7 between each lower seat attachment 114 in each pair. The removable seat 200 can thus be connected both between two adjacent pairs of lower seat attachments 114 as well as aligned with each pair of lower seat attachments 114.

Each upper seat attachment 112 may be aligned with a corresponding lower seat attachment 114 in the transverse direction T of the trailer 100. The transverse direction T is perpendicular to the longitudinal direction L of the trailer 100, the longitudinal direction L (shown in Figure 7) being arranged in the travelling direction of the multipurpose trailer 100.

As is further shown in Figure 2, the multipurpose trailer 100 may further comprise a plurality of straps 108. Each strap 108 may be made from a textile material and be in the form of a webbing. Each strap 108 is configured to be secured to a buckle 110 (shown in Figure 1) for connection to a harness 202 of the removable seat 200. The plurality of straps 108 are arranged such that one strap 108 is positioned in the transverse direction T of the trailer between every two upper seat attachments 112 and/or lower seat attachments 114. One strap 108 may be arranged centrally in the middle of the trailer 100 in the transverse direction T. One strap 108 may be arranged centrally in the middle in the transverse direction T of a respective backrest portion 116a, 116b the trailer 100.

Each strap 108 may be attached to the sheet element 104 and/or to the chassis 102 of the trailer 100. In one embodiment, the strap 108 is attached both to the sheet element 104 and to the chassis 102 of the trailer 100.

Each removable seat 100 may comprise an opening 204 (shown in Figure 1) through a seat portion 208 thereof, wherein each strap 208 is configured to extend through said opening 204 thus allowing the harness 202 of the removable seat 200 to be connected to the chassis 102 and/or the sheet member 104 of the trailer 100.

The multipurpose trailer 100 may comprise a reclinable backrest 116a, 116b. In case of the trailer 100 being a dual seat trailer, each backrest 116a 116b may be individually reclinable. Each removeable seat 200 is configured to follow the reclining of the backrest 116a, 116b.

Figure 3 discloses a front view of a multipurpose trailer 100 in which the removable seat 100 is arranged centrally in the transverse direction T. The multipurpose trailer 100 is a dual seated side-by-side multipurpose trailer 100, however when only one passenger is to be travelling in the trailer it is desired to be able to arrange the seat 200 centrally. This allows the center of gravity to be arranged towards the center of the trailer 100 and thus reducing the risk of that the trailer 100 tips over to either side when subjected to high lateral forces as is the case in a sudden and sharp high speed turn.

Figure 4 discloses a front view of a removable seat 200, the removable seat 200 comprising a seat portion 208, a back portion 206 and may further comprise a harness 202 attached to the back portion 206. The harness 202 may be adjustable in relation to the back portion 206, for instance such that the height thereof in may be altered to suit passengers of different heights. Further, as mentioned above, the removable seat 200 may comprise a through opening 204 in the seat portion 208 being configured to receive a strap 108 of the trailer 100.

In Figure 5 is a rear view of a back portion 206 of a removable seat 200 shown. As illustrated in Figure 5, the removable seat 200 may comprise at least one upper connector 212 and at least one lower connector 214, each connector 212, 214 being configured to be connected to a respective upper and lower seat attachment 112, 114.

Each connector 212, 214 may be formed by a metallic or plastic member, each connector 212, 214 being attached to the removable seat 200 by means of a webbing 210. The webbing 210 may be a textile webbing or be made from another material providing sufficient tensile strength. The webbing 210 may be sewn to the removable seat 200 or attached thereto in another fashion. Each connector 212, 214 may be arranged at a distal end of a respective webbing 210, distal being interpreted as furthest away from the center of the back portion 206 of the removable seat 200.

As is illustrated in Figure 6, the webbing 210 may form a connection between an upper connector 212 and a lower connector 214 thus relieving the material of the removable seat 200 from forces generated by the connectors 212, 214 interaction with the seat attachments 112, 114 on the trailer 100.

Preferably is two upper connectors 212 provided to each removable seat 200, the two upper connectors 212 being arranged at a distance D3 from each other. The distance D3 preferably corresponds the distance D6 between every two upper seat attachments 112 and/or to the distance D1 between every pair of upper seat attachments 112.

Preferably is two lower connectors 214 provided to each removable seat 200, the two lower connectors 214 being arranged at a distance D4 from each other. The distance D4 preferably corresponds the distance D7 between every two lower seat attachments 114 and/or to the distance D2 between every pair of lower seat attachments 114.

Turning to Figure 7, in which a side view of a multipurpose trailer 100 is shown with the extension of the removable seat 200 being schematically illustrated and overlaid. As is shown, the back portion 206 of the removable seat 200 is kept taught by the upper seat attachment 112 and the lower seat attachments 114. The seat portion 208 of the removable seat 200 may be held in place by the strap 108 (shown in Figure 2) and/or for instance by Velcro^{®} or magnetic fasteners.

Figures 8 and Figures 9 discloses a side view of a multipurpose trailer 100 which is collapsible, where the chassis 102 can be folded between a use state illustrated in Figure 8 and a folded state of the trailer 100 illustrated in Figure 9. A folded state is to be interpreted as any state of folding of the chassis 102 when it is not in its use state.

As illustrated in Figures 8 and 9, a distance D5 between the at least one upper seat attachment 112 and the at least one lower seat attachment 114 may be configured to vary depending on folding state of the chassis 102. The distance D5 between the at least one upper seat attachment 112 and the at least one lower seat attachment 114 is preferably larger in a use state than in a folded state of the trailer 102 and may thus be configured such that the upper and lower seat attachments 112, 114 provide tension to the back portion 206 of the removable seat 200 for correct orientation and such that the removable seat 200 cannot be released from the trailer 100 when the trailer 100 is in the use state. As such, the distance D5 may be at least equal to, preferably larger than, the corresponding distance between the upper connectors 212 and lower connectors 214 when the trailer 100 is in the unfolded / use state.

Further, connection of the upper connectors 212 and the lower connectors 214 to respective upper seat attachments 112 and lower seat attachments 114 is facilitated when the trailer 200 is in the folded state whereby the distance D5 is decreased. Once the removable seat 200 is attached, the trailer 200 is brought into the use state whereby the removable seat 200 is further secured.

As is further illustrated in Figures 8 and 9, the multipurpose trailer 100 may comprise a folding hinge 118 arranged between the at least one upper seat attachment and the at least one lower seat attachment. The folding hinge 118 on the chassis 102 provides for allowing the distance D5 to vary between the use state and folded state of the trailer 100. The folding hinge 118 may as shown be arranged on an upright chassis element extending along the rear of the trailer 100 which folds in the longitudinal direction L towards the center of the trailer 100, thus reducing the distance D5 between the upper seat attachments 112 and the lower seat attachments 114.

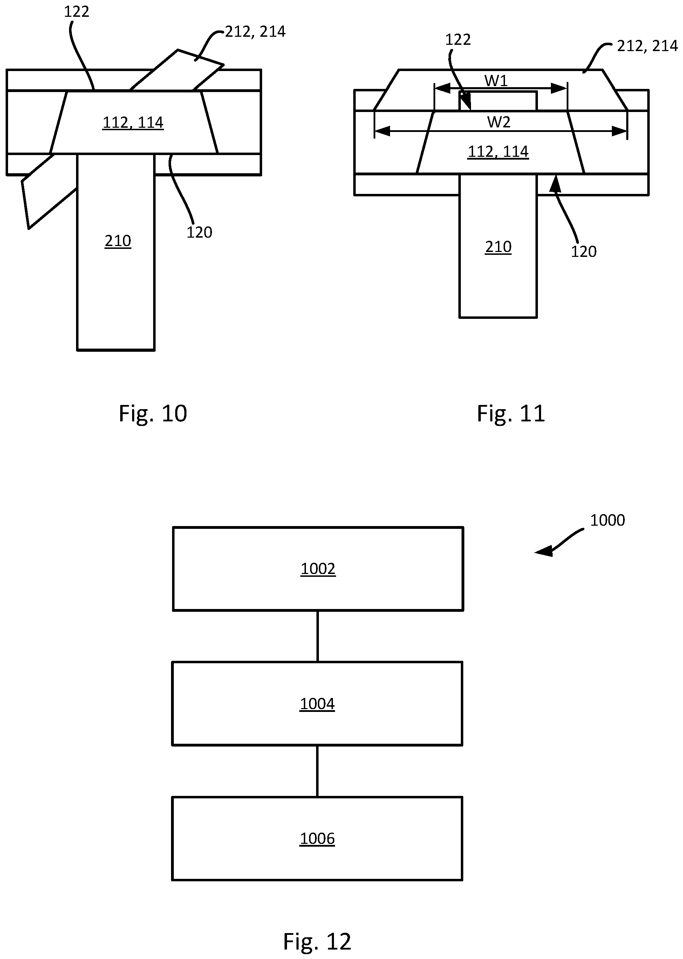

Figures 10 and 11 show a respective detail view of a connector 212, 214 in the process of being attached/removed and as it is attached respectively to a seat attachment 212, 214. The embodiment illustrated in Figures 10 and 11 is applicable to both the upper and lower connector 212, 214 and upper and lower seat attachment 112, 114.

As illustrated, each seat attachment 112, 114 may comprise a first opening 120 and a second opening 122 through which a respective connector 212, 214 of the removable seat 200 is configured to pass. The seat attachment 112, 114 may be formed by a strip of a suitable material being attached at opposite ends thereof to the trailer 100 while a central portion is free, thus forming the first and second openings 120, 122. The seat attachment 112, 114 may be formed by a textile material, for instance webbing.

The first opening 120 may be larger than the second opening 122 and the first opening 120 on the at least one upper attachment 112 and/or the first opening 120 of the at least one lower attachment 114 is arranged facing in a proximal direction in relation to the trailer 100. Proximal in the foregoing is to be interpreted as towards the center of the backrest portion 116a, 116b. In other words, the first opening 120 on each upper seat attachment 112 may be arranged facing towards a corresponding lower seat attachment 114. The first opening 120 being larger than the second opening 122 facilitates attachment of the connector 212, 214 to the seat attachment 112, 114.

The first opening 120 defines the insertion direction of the connector 212, 214 which is first passed through the first opening 120 and secondly through the second opening 122 during attachment of the connector 212, 214 to the seat attachment 112, 114.

Further illustrated in Figure 11 is that a width W1 of the second opening 122 of each seat attachment 112, 114 may be less than a width W2 of the corresponding connector 112, 114. The ratio between the width W1 and the width W2 may be between 0,3 and 0,8.

Figure 12 discloses a schematic flowchart of a method 1000 for securing a removable seat 200 to a multipurpose trailer 100. The multipurpose trailer 100 comprising
a chassis 102 forming a load carrying structure of the trailer 100,
a sheet element 104 supported by the chassis 102,
wherein the multipurpose trailer 100 comprises at least one upper seat attachment 112 and at least one lower seat attachment 114 to which the removable seat 200 is configured to be secured. The method 1000 comprising the steps of:
   setting 1002 the multipurpose trailer 100 in a seat attachment state. The seat attachment state may correspond to the folded state elaborated on in the foregoing and illustrated in Figure 9, where the chassis 102 is moved out of its use state. As such, the method 1000 may comprise at least partially folding the chassis 102 of the multipurpose trailer 100.

The method 1000 further comprises attaching 1004 the at least one removable seat 200 to at least one upper seat attachment 112 and to at least one lower seat attachment 114. The attaching 1004 the at least one removable seat 200 may comprise threading at least one upper connector 212 on the removable seat 200 through a corresponding upper seat attachment 112 and threading at least one lower connector 214 on the removable seat 200 through a corresponding lower seat attachment 114.

The method 1000 further comprises setting 1006 the multipurpose trailer 100 in a removable seat securing state whereby the at least one removable seat 200 is secured to the multipurpose trailer 200. The setting 1006 of the multipurpose trailer 100 in a removable seat securing state may comprise at least partially unfolding the chassis 102 into a use state of the multipurpose trailer 100, as is illustrated in Figure 8. The setting 1006 of the multipurpose trailer 100 in a removable seat securing state may comprise increasing the distance D5 between the at least one upper seat attachment 112 and at least one lower seat attachment 114 such that a pretensioning force is placed on the at least one removable seat 200. The setting 1006 of the multipurpose trailer 100 in a removable seat securing state may comprise moving the folding hinge 118 from an at least partially folded position into an unfolded position, as illustrated in Figure 8.

It is to be understood that the present invention is not limited to the embodiments described above and illustrated in the drawings; rather, the skilled person will recognize that many changes and modifications may be made within the scope of the appended claims.

## Claims

1. A multipurpose trailer (100) for carrying at least one person, wherein said trailer (100) comprises:
a chassis (102) forming a load carrying structure of the multipurpose trailer (100),
a sheet element (104) supported by the chassis (102),
a removeable seat (200), wherein the multipurpose trailer (100) is configured for attachment of the removeable seat (200) in at least two transverse positions of which one is a central position in relation to a transverse direction (T) of the multipurpose trailer (100).

2. The multipurpose trailer (100) according to claim 1, wherein the multipurpose trailer (100) comprises at least one upper seat attachment (112) and at least one lower seat attachment (114) to which the removable seat is configured to be secured, and wherein the at least upper seat attachment (112) and/or the at least one lower seat attachment (114) is attached to the sheet element (104).

3. The multipurpose trailer (100) according to claim 1 or 2, wherein the multipurpose trailer (100) comprises at least one upper seat attachment (112) and at least one lower seat attachment (114) to which the removable seat (200) is configured to be secured, wherein a distance between the at least one upper seat attachment (112) and the at least one lower seat attachment (114) varies depending on folding state of the chassis (102).

4. The multipurpose trailer (100) according to claim 3, wherein the distance (D5) between the at least one upper seat attachment (112) and the at least one lower seat attachment (114) is larger in a use state than in a folded state of the multipurpose trailer (100).

5. The multipurpose trailer (100) according to any one of the preceding claims, wherein the multipurpose trailer (100) comprises at least one upper seat attachment (112) and at least one lower seat attachment (114) to which the removable seat (200) is configured to be secured and wherein the chassis (102) comprises a folding hinge (118) arranged between the at least one upper seat attachment (112) and the at least one lower seat attachment (114).

6. The multipurpose trailer (100) according to any one of the preceding claims, wherein the multipurpose trailer (100) comprises at least two pairs of upper seat attachment (112) and at least two pairs of lower seat attachment (114)s being aligned in the transverse direction (T) of the multipurpose trailer (100) and to which the removable seat (200) is configured to be secured.

7. The multipurpose trailer (100) according to any one of claims 2 to 6, wherein the multipurpose trailer (100) further comprises a plurality of straps (108) configured to be secured to a buckle (110) for connection to a harness (202) of the removable seat (200), wherein one strap (108) is arranged intermediately in the transverse direction (T) of the trailer (100) between every two upper seat attachment (112) and/or lower seat attachments (114).

8. The multipurpose trailer (100) according to claim 7, wherein the strap (108) is attached to the sheet element (104) and/or to the chassis (102) of the multipurpose trailer (100).

9. The multipurpose trailer (100) according to any one of claims 2 to 8, wherein the removable seat (200) comprises at least one upper connector (212) and at least one lower connector (214), the at least one upper connector (212) being configured to be attached a respective upper seat attachment (112) and the at least one lower connector (214) being configured to be attached to a respective lower seat attachment (114).

10. The multipurpose trailer (100) according to any one of claims 2 to 9, wherein each upper and/or lower seat attachment (112, 114) comprises a first opening (120) and a second opening (122) through which a respective connector (212, 214) of the removable seat (200) is configured to pass, the first opening (120) being larger than the second opening (122) and wherein the first opening (120) on the at least one upper attachment (112) and/or the first opening (120) of the at least one lower attachment (114) is arranged facing in a proximal direction in relation to the multipurpose trailer (100).

11. The multipurpose trailer (100) according to claim 7 or 8, wherein each removable seat (200) comprises an opening (204) through a seat portion (208) thereof and wherein each strap (108) is configured to extend through said opening (204).

12. The multipurpose trailer (100) according to any one of the preceding claims, wherein the multipurpose trailer (100) comprises a reclinable backrest (116a, 116b) and wherein the at least removeable seat (200) is configured to follow the reclining of the backrest (116a, 116b).

13. A method (1000) for securing a removable seat (200) to a multipurpose trailer (100), the multipurpose trailer (100) comprising
a chassis (102) forming a load carrying structure of the trailer (100),
a sheet element (104) supported by the chassis (102),
wherein the multipurpose trailer (100) comprises at least one upper seat attachment (112) and at least one lower seat attachment (114) to which the removable seat (200) is configured to be secured, the method (1000) comprising the steps of:
setting (1002) the multipurpose trailer (100) in a seat attachment state,
attaching (1004) the at least one removable seat (200) to at least one upper seat attachment (112) and to at least one lower seat attachment (114),
setting (1006) the multipurpose trailer (100) in a removable seat (200) securing state whereby the at least one removable seat (200) is secured to the multipurpose trailer (100).

14. The method (1000) according to claim 13, wherein attaching (1004) the at least one removable seat (200) comprises threading at least one upper connector (212) on the removable seat (200) through a corresponding upper seat attachment (112) and threading at least one lower connector (214) on the removable seat (200) through a corresponding lower seat attachment (114).

15. The method (1000) according to claim 13 or 14, wherein setting (1006) the multipurpose trailer (100) in a seat attachment state comprises at least partially folding the chassis (102) of the multipurpose trailer (100) and wherein setting (1006) the multipurpose trailer (100) in a removable seat (200) securing state comprises at least partially unfolding the chassis (102) into a use state of the multipurpose trailer (100).
